# EUROPÄISCHE PATENTANMELDUNG

(11) **EP 1 429 111 A1**
(43) Veröffentlichungstag der Anmeldung: **16.06.2004**
(21) Anmeldenummer: 02027560.8
(22) Anmeldetag: 09.12.2002
(51) Int. Cl.: G01B 11/10, G01B 11/24, G02B 26/10, G02B 5/32

(54) **Holographisches optisches Element mit mehreren Interferenzmustern**

(71) Anmelder: ZUMBACH ELECTRONIC AG, CH-2552 Orpund (CH)
(72) Erfinder: Studer, Urs-Peter, 4125 Eiehen / BS (CH); Käser, Beda, 2555 Brügg / BE (CH)
(74) Vertreter: Köster, Hajo, Dr.

(57) **Zusammenfassung**

Bereitgestellt wird ein holographisches optisches Element (10,10',40) für die Messung der Ausdehnung und Lage eines Objektes mit Hilfe eines abgelenkten, einen bestimmten Winkelbereich überstreichenden Laserstrahles (14'), das in einem Abschnitt ein Interferenzmuster aufweist, das durch gleichzeitiges Belichten mit einer fächerförmigen, von einer monochromatischen, kohärenten Laserlichtquelle (1) stammenden Referenzwellenfront (14) und einer parallelen, ebenfalls von dieser Laserlichtquelle stammenden Wellenfront, die in einem anderen Winkel als die Referenzwellenfront (14) auf das Element auftrifft, sowie durch anschließendes Entwickeln erhältlich ist. Das Element besitzt mindestens zwei unterschiedliche Interferenzmuster (25,26,27,43,44,45), wobei bei der Belichtung eine der Zahl der Interferenzmuster entsprechenden Anzahl von parallelen Teil-Wellenfronten (15,16,17) der laserlichtquelle (1) eingesetzt wurden, die sich in der virtuellen Verlängerung durch das Element hindurch nach diesem Element im Zentrum eines Messfeld (18) schneiden. Mit dem Element lassen sich Objekte im mehreren Richtungen vermessen.

## Beschreibung

Die Erfindung betrifft ein holographisches optisches Element für die Messung der Ausdehnung und Lage eines Objektes mit Hilfe eines abgelenkten, einen bestimmten Winkelbereich überstreichenden Lichtstrahles, das in einem Abschnitt ein Interferenzmuster aufweist, das auf per se bekannte Weise durch gleichzeitiges Belichten mit einer fächerförmigen, von einer monochromatischen, kohärenten Laserlichtquelle stammenden Referenzwellenfront und einer parallelen, ebenfalls von dieser monochromatischen, kohärenten Laserlichtquelle stammenden Wellenfront, die in einem anderen Winkel als die Referenzwellenfront auf das Element auftrifft, sowie durch anschließendes Entwickeln erhältlich ist.

Ein derartiges holographisches optisches Element wird im Rahmen der vorliegenden Unterlagen nachstehend als HOE bezeichnet.

Im Allgemeinen erfolgt die Herstellung eines HOE in einem speziellen Holographielabor. Die Einrichtung entspricht im Großen und Ganzen demjenigen eines Photolabors, jedoch mit der Besonderheit, dass nur mit monochromatischem, kohärenten Laserlicht gearbeitet wird. Zur Herstellung von Hologrammen und insbesondere eines HOE werden Filmplatten (beschichtete Glasplatten) verwendet. Diese werden mit ausgewählten Wellenfronten belichtet und anschließend entsprechend der verwendeten Filmschicht entwickelt.

Ein derartiges HOE ist unter anderem in der EP-A 0 245 198 beschrieben. Dort finden sich auch ausführliche Darlegungen für die Herstellung eines HOE, das in einer Vorrichtung und in einem Verfahren zur Erzeugung einer Lichtstrahlung zur Messung der Ausdehnung und/oder der Lage eines Objektes im Bereich des Ablenkungshubes dieses Lichtstrahles eingesetzt wird.

Wird das wie oben beschrieben hergestellte HOE mit einer geeigneten Referenzwellenfront eines Lasers beleuchtet, dann wird die andere, bei der Aufnahme verwendete Wellenfront entsprechend rekonstruiert.

Bei der oben erwähnten, bekannten Vorrichtung kann das zu vermessende Objekt, bei dem es sich insbesondere um ein Kabel oder ähnliches handelt, nur in einer Richtung vermessen werden.

Aufgabe der vorliegenden Erfindung ist es, ein holographisches, optisches Element bereitzustellen, mit dem mehrere Parameter des zu vermessenden Objektes bestimmt werden können.

Gelöst wird diese Aufgabe durch die Lehre der Ansprüche.

Das erfindungsgemäße HOE besitzt somit mindestens zwei unterschiedliche, jeweils einem Abschnitt zugeordnete Interferenzmuster. Mit anderen Worten, das erfindungsgemäße HOE weist zwei sich voneinander unterscheidende Interferenzmuster auf, die in einem bestimmten Bereich des HOE vorhanden sind. Auf die Art und Ausgestaltung dieser Bereiche, wird nachstehend näher eingegangen.

Bei dem erfindungsgemäßen HOE wird zu dessen Herstellung bei der Belichtung eine der Zahl der Interferenzmuster entsprechenden Anzahl von parallelen Teil-Wellenfronten eingesetzt, die von derselben Laserlichtquelle stammen und derart verlaufen, dass sie sich in der virtuellen Verlängerung durch das holographische optische Element hindurch nach diesem Element in einem Punkt bzw. Bereich schneiden.

Nach einer bevorzugten Ausführungsform weist das erfindungsgemäße HOE 3 oder mehr (d. h. 4, 5, 6, viele..) Interferenzmuster auf.

Wird das so entstandene HOE mit einer geeigneten Referenzwellenfront eines Laser beleuchtet, dann werden die anderen, bei der Aufnahme verwendeten Wellenfronten entsprechend rekonstruiert. Durch eine geeignete Auswahl und Anordnung können somit mit einer definierten Referenzwellenfront fast beliebige Wellenfronten erzeugt werden. Im Gegensatz zu konventionellen optischen Elementen, beispielsweise Linsen, Prismen und Spiegel, welche durch die Brechung oder Reflexion des Lichtes nur eine einzige Abbildung reproduzieren können, basiert ein HOE auf dem Beugungsprinzip, weshalb mit geeigneter Filmstruktur mehrere unabhängige Abbildungen möglich werden. Dafür ist allerdings Vorraussetzung, das monochromes Laserlicht verwendet wird, dessen Wellenlänge vorzugsweise dieselbe ist wie die Wellenlänge des bei der Aufnahme verwendeten Laserlichts.

Mit dem erfindungsgemäßen HOE ist es möglich, das zu vermessende Objekt in einer Vorrichtung in mehreren Richtungen zu vermessen und dadurch z. B. bei der Vermessung von Kabeln nicht nur die Dicke in einer Richtung, wie das bei der bisher bekannten Vorrichtung der Fall ist, bestimmen zu können. Durch die Vermessung in mehreren Richtungen ist es auch möglich, andere Parameter als den Durchmesser, zu vermessen. Zu diesen weiteren Parametern gehört beispielsweise die Unrundheit eines Kabels.

Nach einer bevorzugten Ausführungsform werden bei der Belichtung des erfindungsgemäßen HOE solche parallele Teil-Wellenfronten eingesetzt, die alle in einer Ebene liegen. Weiterhin vorzugsweise beträgt bei der Belichtung der Winkel zwischen der Referenzwellenfront und der den parallelen Teil-Wellenfronten gemeinsame Ebene 40° bis 50° und insbesondere ca. 45°, wobei insbesondere die Winkelhalbierende dieses Winkels senkrecht auf der Ebene des holographischen optischen Elements steht.

Nach einer weiterhin bevorzugten Ausführungsform weist das erfindungsgemäße HOE voneinander separate bzw. räumlich getrennte Abschnitte auf, die jeweils nur ein Interferenzmuster besitzen, wobei diese Interferenzmuster unterschiedlich sind. Mit anderen Worten, der erste Abschnitt weist das erste Interferenzmuster, der zweite Abschnitt das zweite Interferenzmuster und der dritte Abschnitt das dritte Interferenzmuster auf usw.

Die Abschnitte mit den unterschiedlichen Interferenzmustern können sich jedoch auf dem HOE auch zumindest bereichsweise räumlich überlappen oder völlig räumlich zusammenfallen. Ein erfindungsgemäßes HOE kann somit einen einzigen Abschnitt aufweisen, der drei überlagerte Interferenzmuster aufweist. Mit anderen Worten, der genannte Abschnitt stellt an sich eine Überlagerung von drei Abschnitten mit jeweils einem Interferenzmuster dar. Es sind im übrigen auch Mischformen möglich, so dass sich die genannten Abschnitte nur teilweise überlappen.

Das erfindungsgemäße HOE kann ein Bestandteil einer Vorrichtung zur Erfassung einer Dimension bzw. der Lage eines Objektes sein. Bei diesem Objekt handelt es sich beispielsweise um ein einen Extruder verlassendes Kabel, Profil oder Rohr. Eine derartige Vorrichtung ist bekannter Art und weist üblicherweise einen Senderteil und einen Empfangsteil auf. Im Senderteil wird ein Lichtstrahl erzeugt, der derart abgelenkt wird, dass er einen bestimmten Winkelbereich überstreicht. Das erfindungsgemäße HOE kann dabei je nach Aufgabenstellung sowohl in den Senderteil als auch in den Empfangsteil oder auch in beide eingesetzt sein. Natürlich sind diese HOE's aufeinander abzustimmen. Ferner ist es möglich, dass das erfindungsgemäße HOE in den Senderteil oder den Empfangsteil eingebaut ist und das in den anderen Teil eingebaute HOE bekannter Art ist. Bei einem derartigen HOE handelt es sich vorzugsweise um eine holographische Filmplatte.

Das erfindungsgemäße HOE kann nicht nur in einer wie oben beschriebenen Vorrichtung sondern für alle solche Zwecke eingesetzt werden, bei denen Wellenfronten durch Beugung am HOE erzeugt werden. Vorzugsweise wird das erfindungsgemäße HOE jedoch zur Messung der Ausdehnung und Lage eines Objektes, insbesondere eines Kabels oder eines Rohres mit Hilfe eines abgelenkten, einen bestimmten Winkelbereich überstreichenden Laserstrahls verwendet.

Die Erfindung wird nachstehend anhand der folgenden Figuren näher erläutert. Von diesen zeigen:
- Figur 1: eine aus der EP-B 0 245 198 bekannten Vorrichtung zur Ermittlung der Dimension und Lage eines Objektes in Stirnansicht in schematischer Darstellung,
- Figur 2: eine Draufsicht auf diese bekannte Vorrichtung,
- Figur 3: eine perspektivische Prinzipansicht zur/zum Herstellung/Belichten eines erfindungsgemäßen HOE,
- Figur 4: eine perspektivische Ansicht beim Anstrahlen des HOE gemäß der Figur 3 mit einem abgelenkten Laserstrahl,
- Figur 5: oben eine schematische Aufsicht und unten eine schematische Seitenansicht auf ein komplettes Messsystem zum Vermessen eines Kabels mit einem HOE mit drei separaten Abschnitten, die jeweils ein unterschiedliches Interferenzmuster aufweisen, in zwei Ansichten,
- Figur 6: eine der Figur 5 in etwa entsprechende Aufsicht, wobei jedoch die Bereiche der Interferenzmuster bei dem erfindungsgemäßen HOE nicht räumlich getrennt bzw. separat angeordnet sind und
- Figur 7: eine schematische Aufsicht auf ein Messsystem, bei dem zwei erfindungsgemäße HOE zum Einsatz gelangen, die in einem Winkel von etwa 90° zueinander angeordnet sind.

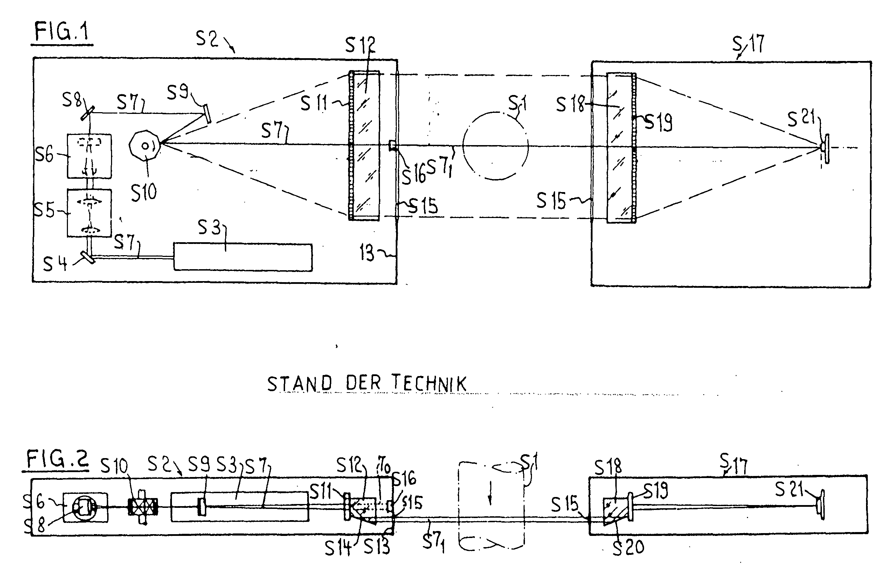

Die Figuren 1 und 2 zeigen eine Vorrichtung zur Erfassung einer Dimension bzw. der Lage eines in diesen Figuren strichpunktiert angedeuteten Objekts S1, beispielsweise eines einen Extruder verlassenden Kabels oder Rohres. Mit Bezugszeichen, denen ein großes S vorangestellt ist, werden im übrigen Merkmale versehen, die aus dem Stand der Technik bekannt sind. So stammen beispielsweise die Figuren 1 und 2 aus der EP-B1 0 245 198, wobei allerdings die Bezugszeichen mit dem genannten Buchstaben S ergänzt wurden. Diese beiden Figuren dienen zum leichteren Verständnis der Einsatzmöglichkeit des erfindungsgemäßen HOE.

Die in der Figur 1 gezeigten Messvorrichtung weist einen Sendeteil S2 auf, welcher der Erzeugung eines telezentrischen Lichtstrahls im Messbereich dient. Es ist eine Laserquelle S3 vorhanden, welche einen kontinuierlichen, monochromatischen Lichtstrahl über einen Spiegel S4 einer sphärischen Aufweitungsoptik S5 zuführt, aus welcher der aufgeweitete Strahl in eine zylindrische Aufweitungsoptik S6 eintritt. Es wird damit ein flacher Lichtstrahl erzeugt, dessen Ebene parallel zur Längsachse des zu messenden Objektes liegt. Dies ist in den Figuren 1 und 2 angedeutet, indem der Lichtstrahl S7 im Bereich des Objektes S1 in der Projektion nach Figur 1 sehr geringe Dicke, in der Projektion nach Figur 2 jedoch eine gewisse Breite aufweist. Eine derartige Aufweitung ist jedoch nicht zwingend erforderlich. Die Erfassung der gewünschten Dimension kann auch mit einem nicht aufgeweiteten Lichtstrahl erfolgen.

Der Lichtstrahl S7 wird über weitere Umlenkspiegel S8 und S9 auf einen achteckigen drehbaren Spiegel S10 geworfen. Bei der Drehung dieses Spiegels im Uhrzeigersinn wird der eintretende Lichtstrahl periodisch über einen in der Figur 1 durch gestrichelte Linien angedeuteten Winkelbereich von oben nach unten abgelenkt. Er trifft dann auf ein holographisches optisches Element (HOE) S11 auf. Dieses HOE dessen optisch wirksame Schicht sehr dünn ist und sich auf einem dünnen optischen durchsichtigen Träger befindet, ist mit einem Prismenkörper S12 verbunden und damit mechanisch stabilisiert. Durch das HOE S11 tritt eine gewisse Teilstrahlung 0-ter Ordnung S7₀ ungebeugt durch und trifft von innen auf die Vorderwand S13 des Gehäuses des Senders S2. Der Hauptanteil des eintretenden Strahls S7 wird dagegen gebeugt und tritt als Strahl 1. Ordnung S7₁ unter einem bestimmten Winkel aus dem HOE aus. Er wird an einer total reflektierenden oder verspiegelten Fläche S14 des Prismenkörpers S12 reflektiert und durch ein Fenster S15 in den Messbereich geworfen. An der Auftreffstelle des austretenden Strahls 0-ter Ordnung S7₀ kann ein oder können mehrere optoelektrische Wandler S16 angeordnet sein. Der Strahl S7₁ trifft auf der gegenüberliegenden Seite des Messbereichs durch ein Fenster S15 in das Gehäuse eines Empfängers S17 ein, in welchen sich ein dem Prismenkörper S12 entsprechend ausgebildeter Prismenkörper S18 mit einem dem HOE S11 entsprechenden HOE S19 befindet. Der eintretende Lichtstrahl wird durch die reflektierende Fläche S20 des Prismenkörpers S18 auf das HOE S19 geworfen, welches den Strahl stets auf einen optoelektrischen Wandler S21, beispielsweise eine Photozelle wirft.

Bei der periodischen Ablenkung des telezentrischen Strahls um den durch die gestrichelten Linien in der Figur 1 begrenzten Ablenkungshub gelangt der Strahl zum Wandler S21, solange er nicht durch das Objekt S1 ausgeblendet ist. Aus der Dauer der Abblendungen aus den Zeitpunkten des Beginns und des Endes der Abblendung, kann auf die Dimension und auf die Lage des Objektes S1 geschlossen werden. Weitere Ausführungen zur Durchführung der anstehenden Berechnungen finden sich in der genannten EP-B1 0 245 198.

Das erfindungsgemäße HOE dient zum Ersatz des in der Figur 1 gezeigten HOE S12. Natürlich kann das erfindungsgemäße HOE auch in anders aufgebauten Vorrichtungen der gleichen Art Anwendung finden.

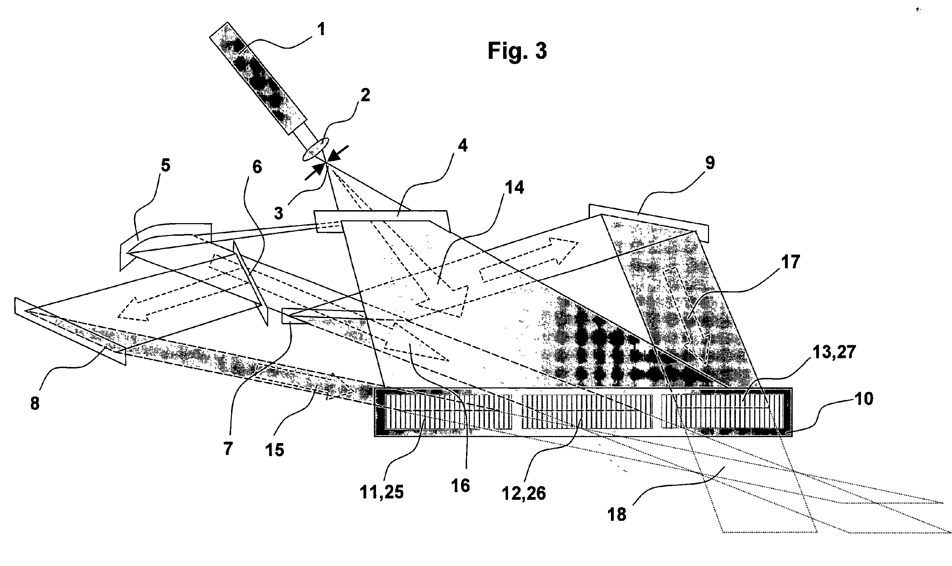

Die Herstellung bzw. Belichtung einer ersten Ausführungsform eines erfindungsgemäßen HOE ist nun in der Figur 3 in perspektivischer und schematischer, nicht maßstabsgetreuer Ansicht dargestellt. Durch den Laser bzw. die Laserlichtquelle 1 wird eine kohärente Wellenfront erzeugt. Um eine fächerförmige Wellenfront zu erhalten, wird der Laserstrahl mit der Linse 2 auf eine Lochmaske 3 fokussiert. Dadurch entsteht eine ideale Punktquelle, welche den geometrischen Ursprung der Referenzwellenfront 14 festlegt.

Um die Kohärenzbedingungen der restlichen Wellenfronten zu erfüllen, müssen diese vom selben Laserstrahl erzeugt werden. Dabei erfolgt eine erste Auslenkung am Strahlteiler 4, von dem der ausgelenkte Lichtstrahl auf den Parabolspiegel 5 gelenkt wird. Die von dort reflektierte Wellenfront wird durch die im Strahlengang des vom Parabolspiegel 5 reflektierten Wellenfront angeordneten Strahlteiler 6 und 7 in insgesamt 3 parallele Wellenfronten "unterteilt". Es handelt sich somit bei diesen Wellenfronten um parallelen Teil-Wellenfronten.

Die mittlere parallele Teil-Wellenfront 16 gelangt zu einem Abschnitt 12 des HOE 10 und erzeugt dort mit der fächerförmigen Referenzwellenfront 14 das benötigte Interferenzmuster bzw. Beugungsmuster 12' auf dem HOE 10. Würde das HOE 10 nur dieses eine Interferenzmuster 12' aufweisen, dann würde es sich um ein HOE gemäß dem Stand der Technik handeln.

Wie bereits oben dargelegt, wurden von der von dem Parabolspiegel 5 reflektierten Wellenfront mit Hilfe der Strahlteiler 6 und 7 zwei Teil-Wellenfronten 16 und 17 ausgelenkt.

Die beiden seitlichen parallelen Teil-Wellenfronten 15 und 17 werden durch Ablenkspiegel 8 und 9 in die seitlichen HOE-Abschnitte 11 und 13 gestrahlt und erzeugen dort zusammen mit der fächerförmigen Referenzwellenfront 14 die entsprechenden Interferenzmuster 11' und 13'. Die optische Länge aller Teil-Wellenfronten 15, 16, 17 und der Referenzfront 14 muss dabei die gleiche sein. Die holographische Filmplatte 10 wird so durch die auf oben genannte Weise erzeugten Interferenzmuster belichtet und anschließend entwickelt.

Die parallelen Teil-Wellenfronten 15, 16 und 17 sind dabei so gewählt bzw. werden derart auf das HOE 10 gelenkt, dass sie sich in der virtuellen Verlängerung durch das HOE 10 hindurch nach diesem Element 10 in dem Bereich/Punkt 18 schneiden, der im Zentrum des zukünftigen Messfeldes 18 der Messvorrichtung liegt.

Alle drei Teil-Wellenfronten 15, 16 und 17 liegen im übrigen in einer Ebene. Der Winkel, der zwischen der Referenzwellenfront 14 und dieser Ebene eingeschlossen ist, beträgt ca. 45°. Die Winkelhalbierende dieses Winkels steht dabei senkrecht auf der Ebene des HOE 10 und somit auf der Papierebene der Fig. 3, wenn das HOE 10 in dieser Papiereben liegt.

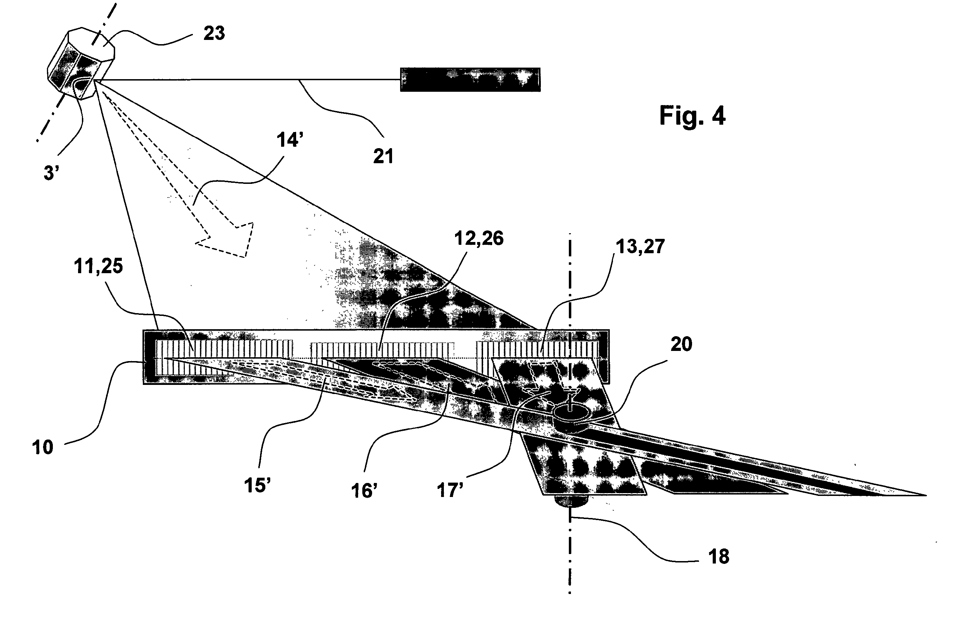

Wird nun das wie oben beschrieben fertiggestellte HOE 10 mit einer Referenzwellenfront 14 angestrahlt, so entstehen durch Beugung an den Interferenzmustern der entsprechenden HOE-Abschnitte 11, 12 und 13 im Messfeld 18 sich kreuzende parallele Wellenfronten 15', 16' und 17', man vergleiche Figur 4. Diese Wellenfronten 15', 16' und 17' erstrecken sich somit in der Richtung und in der Ebene, welche der zuvor genannten virtuellen Verlängerung der bei der Belichtung eingesetzten Teil-Wellenfronten 15, 16, 17 entspricht. Gleichermaßen wie bei einer fächerförmigen Wellenfront verhält sich das HOE 10, wenn ein Laserstrahl 21 im Ursprung 3 der Referenzwellenfront 14 durch einen rotierenden Polygonalspiegel 23 fächerförmig abgelenkt wird. Trifft der abgelenkte Strahl 14' auf die Abschnitte 11, 12 und 13 des HOE 10, wird er durch das lokale, zugehörige Interferenzmuster 25, 26, 27 so gebeugt, dass er nach Verlassen des HOE 10 im Messfeld seitlich parallel abgelenkt wird. Auf diese Weise kann von einem Kabel 20 der Durchmesser aus drei unterschiedlichen Richtungen bestimmt werden. Dabei ist die Unterbrechungszeit des parallelen Laserstrahls aus einer Messrichtung ein Maß für den entsprechenden Durchmesser.

Bei dem beschriebenen HOE 10 sind die Abschnitte 11, 12 und 13 mit den dazugehörigen Interferenzmustern 25, 26 und 27 räumlich voneinander getrennt. Mit anderen Worten, das HOE 10 weist drei separate bzw. diskrete Abschnitte 11, 12 und 13 auf. Auch die Vermessung erfolgt in drei diskreten Achsen.

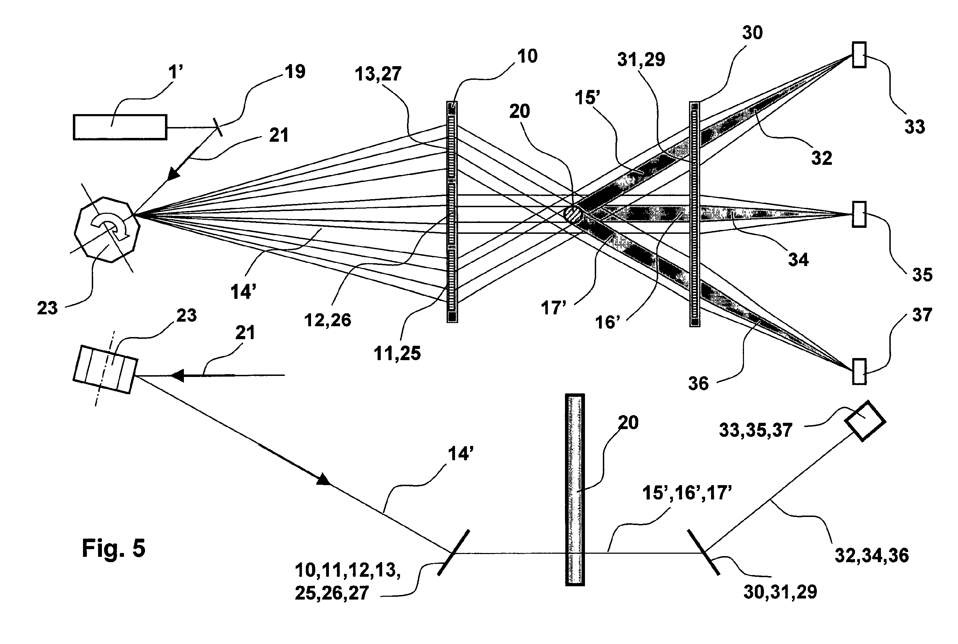

Figur 5 zeigt in schematischer und nicht maßstabsgetreuer Weise oben eine Aufsicht auf ein komplettes Messsystem und unten eine Seitenansicht. In den Sendeteil dieses Messsystems ist ein HOE 10 gemäß Figur 4 integriert; auch die Anordnung des Polygonalspiegels 23 etc. entspricht derjenigen der Figur 4, so dass für gleiche Teile bzw. Elemente gleiche Bezugszeichen verwendet sind. Lediglich ein kleiner Umlenkspiegel 19 kommt hinzu, dessen Funktion jedoch nicht maßgebend ist.

Das HOE 10 wird jedoch nur im Sendeteil nicht hingegen im Empfängerteil eingesetzt. Dort wird hingegen ein HOE 30 verwendet, dass nur einen Abschnitt 31 mit nur einem Interferenzmuster 29 besitzt. Dieses HOE 30 wirkt also wie eine normale Linse. Wenn ein paralleles Strahlenbündel auf eine Linse und im vorliegenden Fall auf das HOE 30 mit dem Interferenzmuster 29 trifft, werden die parallelen Strahlen im Brennpunkt der Linse gebündelt. Dieser Brennpunkt liegt im Normalfall in der optischen Achse, wenn das parallele Strahlenbündel ebenfalls parallel zur optischen Achse ist. Diese Verhältnis finden sich beim zentralen Messstrahl 16' und dem nachfolgenden fokussierenden Strahlengang 34 bis zum Empfängerelement 35.

Strahlt das parallele Strahlenbündel schräg in das HOE 30 bzw. die Linse, wird auch der Brennpunkt seitlich verschoben und zwar auf die Achse, die durch die Linsenmitte oder das Zentrum des HOE 30 führt und parallel zum Strahlenbündel verläuft. Diese Verhältnisse finden sich bei den beiden seitlichen Messstrahlen 15' und 17' vor, wobei die fokussierenden Strahlen 32 und 36 entsprechend die Empfänger 33 und 37 in den versetzten Brennpunkten treffen.

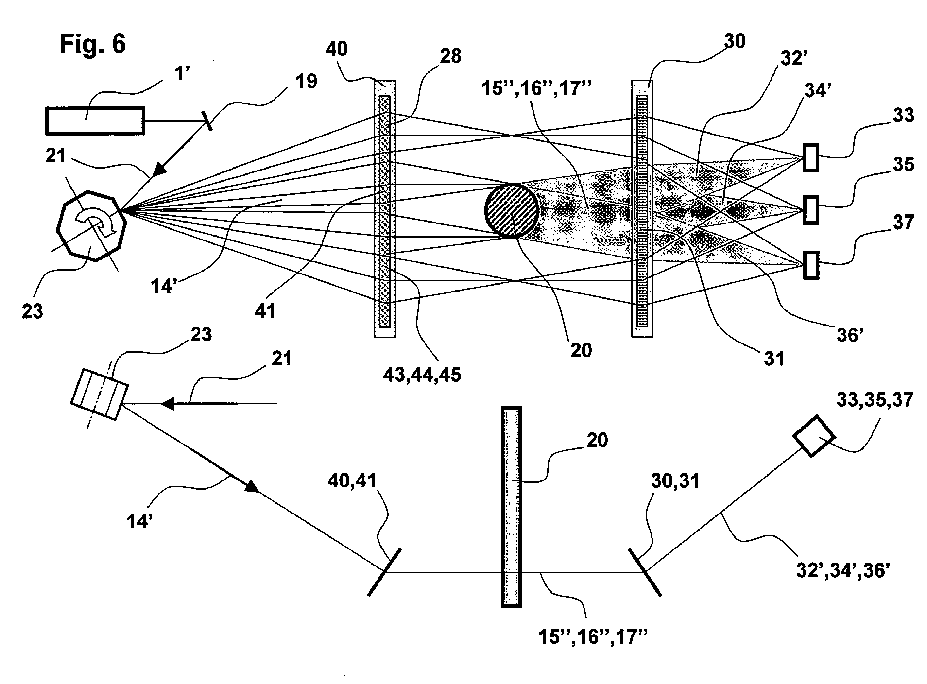

Da das HOE 10 in der Figur 5 drei separate und diskrete Abschnitte 11, 12 und 13 besitzt, erfolgt die Vermessung des Kabels 20 auch in drei diskreten Achsen bzw. Zonen. Bei der Ansicht in der Figur 6, welche der in der Figur 5 gezeigten Ansicht entspricht, ist das HOE 10 der Figur 5 durch ein HOE 40 ersetzt. Dieses HOE 40 weist keine separaten Abschnitte und dazugehörige separat voneinander angeordnete Interferenzmuster auf. Vielmehr besitzt dieses HOE 40 nur einen Abschnitt mit einem Interferenzmuster 28, das aus drei sich überdeckenden verschiedenen Interferenzmustern 43, 44 und 45 besteht. Zur Herstellung eines derartigen HOE 40 müssen sich die durch die parallelen Wellenfronten bestrahlten Abschnitte überdecken. Das HOE 40 verhält sich dann optisch so, wie wenn sich drei verschiedene Linsensysteme ineinander befänden, was bei normalen Linsen ja nicht möglich ist.

Das HOE 30 des Empfängerteils bei der in der Figur 6 gezeigten Ausführungsform entspricht dem HOE 30 der in der Figur 5 gezeigten Ausführungsform.

Auch bei der Figur 6 sind im übrigen gleiche Elemente bzw. Teile mit denselben Bezugszeichen oder mit Bezugszeichen, die zusätzlich ein oder zwei Oberstriche (' bzw. ") besitzen, versehen.

Das in der Figur 6 zusätzlich gezeigte Einsetzen von sehr flachen Messwinkeln hat den Vorteil, dass bei einem unregelmäßigen Profil gleichzeitig ein mögliches Maximum der Dimensionen eindeutig erfasst werden kann. Für höhere Ansprüche kann das Maximum auch interpoliert werden.

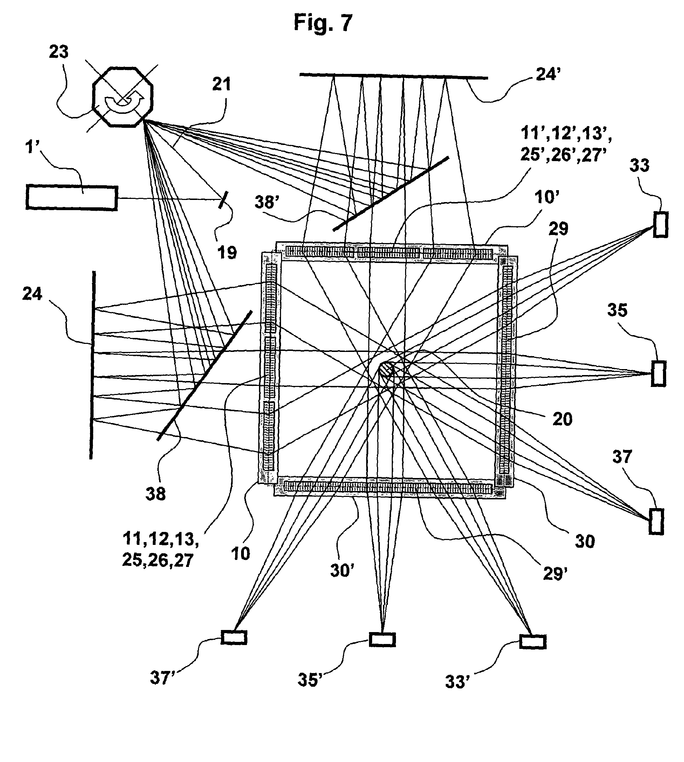

Figur 7 zeigt eine weitere Ausführungsform in der Aufsicht in schematischer und nicht maßstabsgetreuer Darstellung, wobei zwei HOE 10, 10' zur Anwendung kommen, die dem HOE 10 bei der in der Figur 5 gezeigten Ausführungsform entsprechen. Allerdings sind diese beiden HOE 10, 10' senkrecht zueinander angeordnet, so dass das Kabel 20 aus zwei Hauptrichtungen vermessen wird, die senkrecht aufeinander stehen. Auch bei der in der Figur 7 gezeigten Ausführungsform sind gleiche Elemente bzw. Teile mit gleichen Bezugszeichen oder mit Bezugszeichen, die zusätzlich ein oder zwei Oberstriche (' bzw. ") besitzen, versehen. Aus praktischen und ökonomischen Gründen sind zudem zusätzliche Umlenkspiegel 24, 24', 38 und 38' vorgesehen.

Bei dieser Ausführungsform weisen die HOE 10, 10' im Senderteil separate Abschnitte 11, 12 und 13 und somit separate Interferenzmuster 25, 26 und 27 auf. Die HOE 30 besitzen jeweils nur einen Abschnitt 30 und somit ein Interferenzmuster 29. Mit dieser Ausführungsform kann das Kabel 20 in insgesamt 6 diskreten Richtungen bzw. Achsen vermessen werden. Es sind 2 x 3 separate Abschnitte 11, 12, 13 in beiden HOE 10, 10' des Senderteils vorhanden.

### Bezugszeichenliste

- 1, 1': Laserlichtquelle
- 2: Linse
- 3: Lochmaske
- 4: Strahlteiler
- 5: Parabolspiegel
- 6: Strahlteiler
- 7: Strahlteiler
- 8: Ablenkspiegel
- 9: Ablenkspiegel
- 10, 10': Holographisches Optische Element = HOE, Filmplatte
- 11, 12, 13: Abschnitt auf dem HOE
- 14: fächerförmige Referenzwellenfront
- 14': abgelenkter Laserstrahl
- 15, 16, 17: parallele Teil-Wellenfront
- 15', 16', 17': Messstrahl
- 15", 16", 17": Messstrahl
- 18: Messfeld
- 19: Umlenkspiegel
- 20: Kabel
- 21: Laserstrahl
- 22, 22': Umlenkspiegel
- 23: Polygonalspiegel
- 24, 24': Umlenkspiegel
- 25, 26, 27: Interferenzmuster im zugehörigen Abschnitt 11, 12 bzw.13
- 28: drei überdeckende Interferenzmuster im Abschnitt 41
- 29, 29': Interferenzmuster des HOE 30
- 30, 30': HOE
- 31, 31': Abschnitt des HOE 30
- 32, 32': fokussierende Strahlen
- 33, 33': Empfänger
- 34, 34': fokussierende Strahlen
- 35, 35': Empfänger
- 36, 36': fokussierende Strahlen
- 37, 37': Empfänger
- 38, 38': Umlenkspiegel
- 39 40: HOE
- 41: Abschnitt
- 42, 42': Umlenkspiegel
- 43, 44, 45: Interferenzmuster

## Patentansprüche

1. Holographisches optisches Element für die Messung der Ausdehnung und Lage eines Objektes mit Hilfe eines abgelenkten, einen bestimmten Winkelbereich überstreichenden Laserstrahles (14'), das in einem Abschnitt ein Interferenzmuster aufweist, das auf per se bekannte Weise durch gleichzeitiges Belichten mit einer fächerförmigen, von einer monochromatischen, kohärenten Laserlichtquelle (1) stammenden Referenzwellenfront (14) und einer parallelen, ebenfalls von dieser monochromatischen, kohärenten Laserlichtquelle stammenden Wellenfront, die in einem anderen Winkel als die Referenzwellenfront (14) auf das Element auftrifft, sowie durch anschließendes Entwickeln erhältlich ist,
**dadurch gekennzeichnet,**
**dass** das holographisches optisches Element (10, 10', 40) mindestens zwei unterschiedliche, jeweils einem Abschnitt (11, 12, 13, 41) zugeordnete Interferenzmuster (25, 26, 27, 43, 44, 45) besitzt und
**dass** bei der Belichtung eine der Zahl der Interferenzmuster entsprechenden Anzahl von parallelen Teil-Wellenfronten (15, 16, 17) eingesetzt wurden, die von derselben Laserlichtquelle (1) stammen und derart verlaufen, dass sie sich in der virtuellen Verlängerung durch das holographische optische Element (10, 10', 40) hindurch nach diesem Element (10, 10', 40) in dem Zentrum eines Messfeld (18) schneiden.

2. Element nach Anspruch 1,
**dadurch gekennzeichnet,**
**dass** es drei oder mehr unterschiedliche Interferenzmuster (25, 26, 27, 28) aufweist.

3. Element nach Anspruch 2,
**dadurch gekennzeichnet,**
**dass** bei der Belichtung solche parallelen Teil-Wellenfronten (15, 16, 17) eingesetzt wurden, die alle in einer Ebene liegen.

4. Element nach Anspruch 3,
**dadurch gekennzeichnet,**
**dass** bei der Belichtung der Winkel zwischen der Referenzwellenfront (14) und der den parallelen Teil-Wellenfronten (15, 16, 17) gemeinsame Ebene 40 bis 50° und insbesondere ca. 45° beträgt und
die Winkelhalbierende dieses Winkels senkrecht auf der Ebene des holographischen optischen Elements (10, 10', 40) steht.

5. Element nach einem der vorhergehenden Ansprüche,
**dadurch gekennzeichnet,**
**dass** die Abschnitte (11, 12, 13) mit den Interferenzmustern (25, 26, 27) auf dem holographischen optische Element (10, 10') räumlich voneinander getrennt sind.

6. Element nach einem der Ansprüche 1 bis 4,
**dadurch gekennzeichnet,**
**dass** sich die Abschnitte (41) mit den Interferenzmustern (43, 44, 45) auf dem holographischen optische Element (40) zumindest bereichsweise räumlich überlappen oder völlig räumlich zusammenfallen.

7. Element nach einem der vorhergehenden Ansprüche,
**dadurch gekennzeichnet,**
**dass** es in eine per se bekannte, mit einem Senderteil zur Erzeugung eines Laserstrahles (14') und mit einem Empfangsteil, die beide ein holographisches optisches Element besitzen, ausgerüsteten Vorrichtung zur Messung der Ausdehnung und Lage eines Objektes mit Hilfe dieses Laserstrahles (14'), der derart abgelenkt wird, dass er einen bestimmten Winkelbereich überstreicht, integriert ist und dass es das holographische optische Element (10, 10', 40) des Senderteils darstellt.

8. Element nach einem der vorhergehenden Ansprüche,
**dadurch gekennzeichnet,**
**dass** das holographische optische Element (10, 10', 40) eine holographische Filmplatte ist.

9. Verwendung eines holographischen optischen Elements (10, 10', 40) nach einem der vorhergehenden Ansprüche zur Messung der Ausdehnung und Lage eines Objektes, insbesondere eines Kabels (20), eines Profils oder eines Rohres, mit Hilfe eines abgelenkten, einen bestimmten Winkelbereich überstreichenden Laserstrahles (14').
